# FASCICULE DE BREVET EUROPEEN

(11) **EP 3 166 088 B1**
(45) Date de publication et mention de la délivrance du brevet: **16.07.2025**
(21) Numéro de dépôt: 16197846.5
(22) Date de dépôt: 08.11.2016
(51) Int. Cl.: H04M 11/02, G07C 9/38, G07C 9/00

(54) **PROCÉDÉ DE GESTION D'ACCÈS À UN LOCAL**
ZUGANGSSTEUERUNGSVERFAHREN ZU EINEM RAUM
METHOD FOR MANAGING ACCESS TO A PREMISE

(30) Priorité: 09.11.2015 FR 1560699
(43) Date de publication de la demande: 10.05.2017
(73) Titulaire: HAPIIX, 33600 Pessac (FR)
(72) Inventeur: Mauro, Salvatore, 26300 Besayes (FR)
(74) Mandataire: Aquinov

(56) Documents cités:
- EP-A1- 2 894 609
- EP-B1- 3 227 864
- WO-A1-2007/031654
- WO-A1-2016/087478
- WO-A2-2014/083436
- US-A1- 2007 103 548
- US-A1- 2014 049 364
- ANONYMOUS: "Yes! It's the NFC phone-bonk doorbell app AT LAST - The Register", 9 May 2013 (2013-05-09), XP055641160, Retrieved from the Internet <URL:https://www.theregister.co.uk/2013/05/09/nfc_doorbell_bonkers/> [retrieved on 20191111]
- ANONYMOUS: "Frontpage - doorbl - your NFC and QR code doorbell", 21 April 2015 (2015-04-21), XP055641187, Retrieved from the Internet <URL:http://web.archive.org/web/20150421163640/http://www.doorbl.com/> [retrieved on 20191111]
- ANONYMOUS: "PHONEBELL | Devpost", 5 October 2014 (2014-10-05), XP055641179, Retrieved from the Internet <URL:https://devpost.com/software/phonebell> [retrieved on 20191111]

## Description

### Domaine technique de l'invention

L'invention est relative à un procédé de gestion d'accès à un local comportant un espace résident, via une porte principale.

L'invention trouve son application dans le domaine de la sécurité, notamment la gestion et la surveillance des entrées de locaux résidentiels administratifs ou industriels.

### État de la technique

La plupart des locaux comporte une porte d'entrée principale distante de l'endroit de présence effective des résidents à l'intérieur de ces locaux. Dès lors, divers moyens sont mis en œuvre pour permettre aux résidents d'ouvrir à distance, la porte d'entrée principale à un visiteur. Pour des raisons de sécurité, ces moyens doivent permettre aux résidents de communiquer avec le visiteur afin qu'ils puissent le reconnaître de sorte à accepter ou refuser sa requête pour accéder au local.

Un moyen classique dit « interphone », consiste à établir une liaison téléphonique et/ou télévisuelle filaire permettant la communication entre le visiteur et un résident dans le local. Le système interphone comporte un terminal d'accueil, appelé communément platine de rue, et un terminal résident appelé communément combiné intérieur.

La platine de rue est fixée à proximité de la porte principale et à l'extérieur du local. Le combiné intérieur est installé au sein du local dans un espace associé au résident, et permet en outre l'ouverture de la porte d'entrée. La platine de rue comporte généralement une liste des différents résidents, et un clavier permettant de choisir un résident dans la liste et d'établir une communication entre la platine de rue et un combiné intérieur associé au résident choisi. La liste des résidents est ainsi accessible aux passants. Un tel système est par exemple connu de WO 2007/031654 A1.

Par ailleurs, le système interphone nécessite une installation spécifique d'un combiné intérieur dans chaque espace associé à un résident dans le local. La connexion entre la platine de rue et un combiné intérieur peut être sans fil, si la distance entre les deux est inférieure à une dizaine de mètres. Pour la plupart des locaux, notamment les grands locaux, une connexion filaire est recommandée, afin de s'affranchir des interférences dues à l'environnement, ou aux réseaux locaux de télécommunication sans fil, ou encore aux autres systèmes interphones sans fil installés dans le voisinage.

De ce fait, l'installation d'un système interphone, est longue, couteuse et nécessite un raccordement, qui peut s'avérer complexe, de câbles spécifiques pour connecter chaque combiné intérieur à la platine de rue. En outre, ce type d'installation nécessite des travaux de maintenance réguliers.

### Objet de l'invention

Il existe un besoin de fournir un procédé de gestion d'accès à un local, sécurisé, facile à réaliser et à adapter, offrant en outre une discrétion concernant les identités des résidents dans le local, et permettant d'éviter l'utilisation d'une installation munie de connexions filaires complexes.

On tend vers cet objectif en prévoyant un procédé de gestion d'accès à un local comportant un espace résident, via une porte, en prévoyant un support d'une information codée représentative du local, et un terminal résident associé à l'espace résident. Le procédé prévoit également l'utilisation d'un terminal visiteur mobile configuré pour lire l'information codée, et d'un serveur informatique stockant des données résidents associées à l'espace résident, le serveur informatique étant configuré pour communiquer avec le terminal visiteur et pour contrôler l'ouverture de la porte. Le procédé comporte avantageusement les étapes successives suivantes :
- récupérer l'information codée au moyen du terminal visiteur à partir dudit support puis transmettre l'information codée au serveur informatique ;
- traiter l'information codée par le serveur informatique, puis transmettre les données résidents au terminal visiteur de sorte à autoriser au terminal visiteur d'établir une communication avec le terminal résident ; et
- autoriser l'ouverture de la porte par le terminal résident, via le serveur informatique.

Préférentiellement, les données résidents reçues par le terminal visiteur sont chiffrées.

Le terminal résident peut être un téléphone fixe configuré pour envoyer un signal d'autorisation d'ouverture de la porte au serveur informatique.

De manière préférentielle :
- le terminal résident est un ordiphone configuré pour communiquer avec le serveur informatique de sorte à contrôler l'ouverture de la porte via le serveur informatique,
- le terminal visiteur comporte un ordiphone,
- le support affiche un code numérique, un code-barres, ou un code matriciel,
- la communication est réalisée par un réseau de télécommunication, et les terminaux résident et visiteur échangent des données vidéo et/ou audio et/ou textuelles.

Le support peut également comporter un circuit électronique radio-identifiant.

Par ailleurs, le serveur informatique est préférentiellement configuré pour stocker une liste d'informations associées à plusieurs terminaux autorisés comportant le terminal résident. En outre, l'étape de traitement de l'information codée comporte une étape de transmission de la liste d'informations vers le terminal visiteur de sorte à choisir les données résidents associées au terminal résident dans la liste d'informations, et à communiquer avec le terminal résident.

De manière avantageuse, le terminal résident comporte une mémoire configurée pour sauvegarder des informations relatives à la communication entre le terminal résident et le terminal visiteur.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente de manière schématique un mode de réalisation particulier du procédé de gestion d'accès à un local ;
- la figure 2 représente de manière schématique un terminal visiteur selon un exemple de réalisation du procédé de gestion d'accès à un local.

### Description de modes préférentiels de réalisation

Un procédé de gestion d'accès à un local via une porte, facile à mettre en œuvre et à adapter, et tendant à remédier aux inconvénients cités ci-dessus, est décrit ci-après.

Avantageusement, le procédé prévoit le remplacement d'un terminal d'accueil ou platine de rue installé à proximité de la porte, par un simple support, par exemple mural, d'une information codée. Le procédé prévoit l'utilisation d'un terminal visiteur mobile pouvant récupérer ladite information codée.

L'association d'un simple support et d'un terminal visiteur mobile remplace un terminal d'accueil et permet en outre d'effectuer au moins les mêmes fonctions. Le procédé permet ainsi d'offrir un confort d'utilisation, sécurité et discrétion, aux résidents du local et de s'affranchir de l'utilisation d'une installation comportant des terminaux fixes connectés par voie filaire.

Pour les différents exemples et modes de réalisation présentés ci-dessous, les mêmes références seront utilisées pour des éléments identiques ou assurant la même fonction. De plus, les caractéristiques techniques décrites ci-après pour les différents exemples et modes de réalisation sont à considérer isolément ou selon toute combinaison techniquement possible.

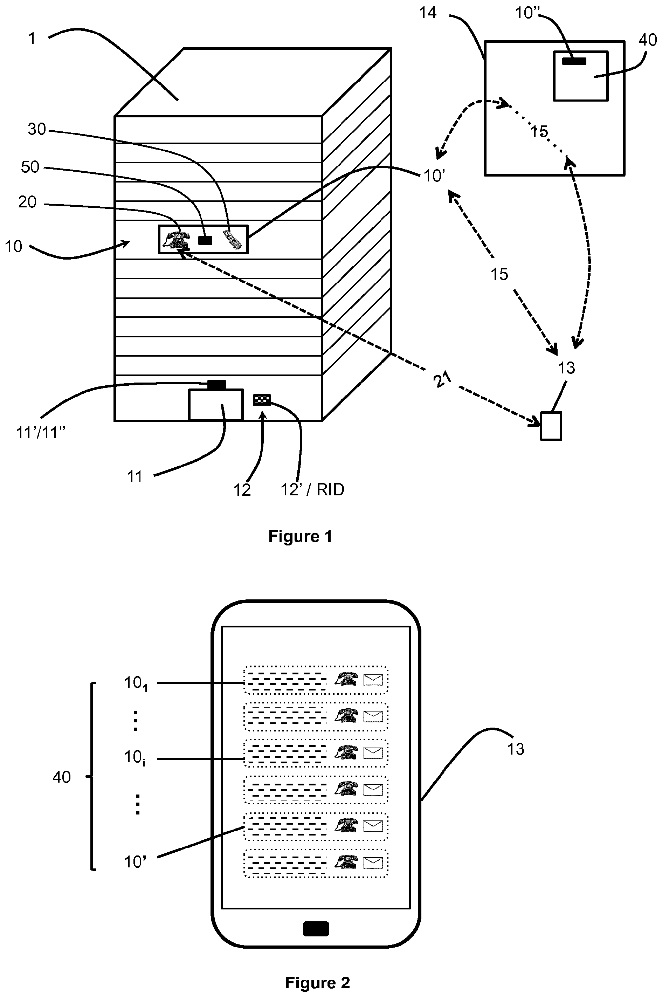

Selon un mode de réalisation illustré à la figure 1, le procédé concerne la gestion d'accès d'une personne, désigné ci-après visiteur, souhaitant rendre visite à une autre personne associée à un espace compris dans un local, ci-après désigné résident. Autrement dit, le procédé vise à gérer l'accès d'un visiteur à un local 1 comportant un espace résident 10 via une porte 11.

L'espace résident 10 est associé à un terminal résident 10', pouvant être un terminal fixe tel qu'un téléphone fixe installé à l'intérieur de l'espace résident 10, ou un terminal mobile tel qu'un ordiphone, ou téléphone mobile intelligent sans fil. Le téléphone fixe est rattaché à un réseau de communication fixe tel qu'un réseau téléphonique fixe, de manière à pouvoir passer ou recevoir des communications avec des tiers via le réseau téléphonique.

Par ordiphone, on entend un appareil électronique mobile qui assure par voie radioélectrique des fonctions de communication, telles que la téléphonie et/ou l'accès à Internet, ainsi que des fonctions de calcul, de traitement de données et des fonctions informatiques ou multimédias comme un ordinateur.

Par ailleurs, l'espace résident 10 peut être associé à plusieurs terminaux résidents (10'₁, 10'₂, ...). Les fonctions et les caractéristiques décrites ci-après pour le terminal résident 10' restent valables pour chacun des terminaux résidents (10'₁, 10'₂, ...) associés à l'espace résident 10.

Le procédé prévoit un support 12 d'une information codée 12' représentative du local 1. Le support 12 est préférentiellement placé à proximité de la porte 11 permettant à un visiteur de s'introduire dans le local 1. Par ailleurs, le local 1 est avantageusement dépourvu d'un terminal d'accueil, une plaque ou une console de rue.

Le procédé prévoit avantageusement un terminal visiteur 13 mobile. Le terminal visiteur 13 est configuré pour lire l'information codée 12' du support 12. Ainsi, un visiteur souhaitant s'introduire dans le local 1, utilise dans un premier temps le terminal visiteur 13 pour lire l'information codée 12' à partir du support 12, et pour envoyer cette information à un serveur informatique 14. Préférentiellement, le terminal visiteur 13 comporte un ordiphone.

Le serveur informatique 14 est configuré pour communiquer avec le terminal visiteur 13. De manière préférentielle, le terminal visiteur 13 et le serveur informatique 14 sont configurés de sorte à communiquer entre eux via un réseau de télécommunication public ou privé, tel que le réseau Internet ou les moyens de communication filaire (fils de cuivre), fibre optique, rayonnement électromagnétique.

La communication entre les différents éléments prévus dans ce procédé peut être réalisée au sein d'un réseau étendu à longue portée basé sur le protocole LoRaWAN (LoRaWAN pour l'acronyme anglais de « Long Range Wide-area network »). Ce type de réseau permet la communication à bas débit, par des ondes radio, d'objets communiquant selon la technologie « LoRa » et connectés à l'Internet via des passerelles, facilitant ainsi la communication entre les dispositifs (*i.e.* internet des objets, réseaux machine-à-machine, etc.).

Avantageusement, le terminal visiteur 13 peut comporter un ordiphone utilisant un réseau de téléphonie mobile pour se connecter au réseau Internet, et pour communiquer avec le serveur informatique 14. Le serveur 14 peut comporter un serveur principal et un serveur de redondance qui prend le relai du serveur principal en cas de défaillance de ce dernier. Le serveur de redondance est avantageusement situé dans un endroit différent du serveur principal.

Préférentiellement, le terminal visiteur 13 utilise une carte à puce, par exemple une carte à puce de type SIM (SIM pour l'acronyme anglais « Subscriber Identity Module »). Ce type de carte est généralement utilisé pour accéder aux réseaux mobiles de type service GPRS ou système UMTS (GPRS pour l'acronyme anglais « General Packet Radio Service » et UMTS pour l'acronyme anglais de « Universal Mobile Telecommunications System »).

Le service GPRS est un service de communication de données par paquets, fourni sur un réseau mobile de type GSM, et qui permet un accès à Internet. Le système UMTS est un système cellulaire numérique de communication avec des mobiles ou entre mobiles, destiné à offrir une large gamme de services de voix, de données et d'images, ainsi que l'accès à Internet. Préférentiellement, le terminal visiteur 13 transmet l'information codée 12' après sa lecture au serveur informatique 14 via Internet.

Le serveur informatique 14 comporte des interfaces de communication configurées pour recevoir l'information codée 12' brute transmise par le terminal mobile 13. Le serveur informatique 14 est également muni d'un circuit d'analyse et de décodage configuré pour décoder et traiter cette information codée 12' avant de transmettre une réponse au terminal visiteur 13 via les interfaces de communication. Préférentiellement, le serveur informatique 14 comporte un microprocesseur configuré pour charger des instructions en mémoire pour les exécuter et pour effectuer des opérations, des programmes informatiques ou des applications.

Par ailleurs, le serveur informatique 14 stocke des données résidents 10" associées à l'espace résident 10. Le serveur comporte ainsi une ou plusieurs mémoires. Préférentiellement, le serveur informatique 14 comporte une mémoire volatile configurée pour exécuter des instructions d'un programme informatique, et une mémoire non volatile configurée pour stocker, par exemple, une application ou un programme à télécharger ou encore des données chiffrées ou libres d'accès.

De manière préférentielle, le serveur informatique 14 comporte un ou plusieurs logiciels pour exécuter les étapes de décodage et de traitement de l'information codée 12', et pour communiquer avec le terminal visiteur 13 et d'autres modules externes. En outre, le serveur informatique 14 est configuré de sorte à être accessible par le terminal visiteur 13 de manière permanente, par exemple via Internet.

Le procédé prévoit également un système de déverrouillage 11' à distance de la porte 11. Le système de déverrouillage 11' peut comporter une serrure électrique et/ou une serrure électromagnétique, configurées pour occuper un premier état dans lequel la serrure ne bloque pas l'ouvrant de la porte 11 par rapport à l'huisserie de la porte 11, et un deuxième état dans lequel la serrure bloque l'ouvrant par rapport à l'huisserie. Le terminal résident peut savoir à tout moment si la porte est ouverte ou non, par exemple au moyen d'un code couleur.

Le système de déverrouillage 11' comporte en outre un circuit de commande configuré pour contrôler la serrure de la porte 11, autrement dit, pour verrouiller/déverrouiller la porte 11. Le circuit de commande comporte avantageusement une interface de communication 11", par exemple un modem GSM ou GPRS, adaptée pour communiquer avec le serveur informatique 14 via une de ses interfaces de communication. Ainsi, le circuit de commande contrôle la serrure de la porte 11 en fonction des données reçues du serveur informatique 14.

Lorsqu'un visiteur muni du terminal visiteur 13 souhaite s'introduire dans le local 1, il utilise le terminal visiteur 13 pour récupérer l'information codée 12' du support 12. Le terminal visiteur 13 envoie ensuite cette information codée 12' brute ou traitée au serveur informatique 14.

L'information codée 12' représentative du local 1 est traitée par le serveur informatique 14. Après l'étape de traitement, le serveur informatique 14 transmet au terminal visiteur 13 les données résidents 10" stockées dans la mémoire du serveur informatique 14. Par ailleurs, si le terminal visiteur 13 est enregistré ou authentifié par le serveur 14, ce dernier peut lui donner l'autorisation d'ouvrir la porte 11.

De manière préférentielle, le serveur informatique 14 stocke une liste d'informations 40 associées à plusieurs terminaux autorisés 10i en relation avec l'information codée 12'. Des informations relatives au terminal résident 10' se trouvent parmi la liste d'informations 40. L'étape de traitement de l'information codée 12' comporte avantageusement une étape de transmission de la liste d'informations 40 vers le terminal visiteur 13 de sorte à pouvoir choisir le local désiré et donc les données résidents 10" associées au terminal résident 10' dans la liste d'informations 40, et ensuite à communiquer avec le terminal résident 10'.

A titre d'exemple, un terminal visiteur 13 lit l'information codée 12' ce qui initie une communication avec le serveur informatique 14. Le serveur informatique 14 génère une première information décrivant le local ou les différents locaux associés à l'information codée 12'. Par exemple, à la lecture de l'information codée 12', le terminal visiteur 13 récupère la liste des appartements présents dans une résidence. Ces différents appartements peuvent être identifiés par tout moyen adapté, par numéro d'appartement, par numéro d'étage et position dans l'étage, par nom du résident principal.

Le visiteur peut alors choisir le local à visiter en le sélectionnant à partir du terminal visiteur. Ce choix peut initier l'ouverture d'un canal de communication avec le résident ou la génération d'une deuxième liste. Dans le cas où plusieurs résidents sont associés à un même local, il est possible de prévoir qu'un ou plusieurs des résidents soit autorisé à communiquer avec les visiteurs. Ainsi, lors du choix du local par le visiteur, ce dernier a accès à une nouvelle liste avec les résidents associés. Une fois que le visiteur choisit le résident avec lequel il veut discuter, un canal de communication est ouvert entre le terminal visiteur 13 et le terminal résident 10' sélectionné.

De manière avantageuse, le procédé selon l'invention, permet de gérer facilement et rapidement des données associées à un local comportant un grand nombre de résidents.

Les données 10" transmises au terminal visiteur 13 sont configurées de sorte que le terminal visiteur 13 soit autorisé à établir une communication 15 avec le terminal résident 10'. Par exemple, les données résidents 10" comportent notamment le nom du résident, l'emplacement de l'espace résident dans le local 1. Les données sont avantageusement dépourvues du numéro de téléphone de l'occupant du local.

De manière préférentielle, les données résidents 10" reçues par le terminal visiteur 13 sont chiffrées, de sorte que le terminal visiteur 13 puisse établir la communication 15 avec le terminal résident 10' sans pouvoir sauvegarder les données résidents 10". Ainsi, les données résidents 10" ne sont pas divulguées au visiteur, respectant de manière avantageuse, l'intimité et la discrétion d'un résident dans le local.

Après l'établissement de la communication 15 entre les terminaux, le terminal résident 1 0' peut autoriser l'ouverture de la porte 11 via le serveur informatique 14. Pour ouvrir la porte 11, dans un mode de réalisation non couvert, le terminal résident 1 0' peut communiquer directement avec le serveur informatique 14, ou encore, selon un mode de réalisation de l'invention, peut envoyer un signal chiffré au terminal visiteur 13 qui le transmet au serveur informatique 14 pour ouvrir la porte 11.

Le serveur informatique 14 sauvegarde avantageusement des informations concernant la communication 15, par exemple, des informations relatives au terminal visiteur 13, l'identité du visiteur, l'horodatage de la communication 15 et l'horodatage de l'ouverture de la porte 11, etc. Ainsi, en plus de remplir une fonction semblable à celle d'un « interphone » classique, et d'une gestion classique d'accès à un local avec un badge, le procédé permet avantageusement une traçabilité des accès et des tentatives d'accès au local 1, assurant ainsi une amélioration de la sécurité du local 1.

Le procédé d'accès selon l'invention utilise un simple support d'une information codée au lieu d'une platine de rue ou terminal d'accueil. Ainsi, le procédé permet avantageusement de faire des économies en s'affranchissant d'un terminal d'accueil couteux, encombrant et nécessitant une installation robuste à proximité de la porte d'entrée. Le remplacement d'un terminal d'accueil par un support d'une information codée configurée pour être lue par un terminal visiteur mobile, permet d'éviter les problèmes de vandalisme et de maintenance dudit terminal d'accueil. En outre, l'affichage d'une information codée permet d'éviter l'affichage d'une liste de résidents, permettant ainsi aux résidents une discrétion appréciable pour des résidents voulant garder l'anonymat.

Les ordiphones sont des dispositifs électroniques largement démocratisés de nos jours. Ainsi, l'utilisation d'un tel dispositif comme terminal visiteur, permet avantageusement une utilisation facile et confortable.

Par ailleurs, le terminal résident 10' peut comporter un terminal de communication fixe 20, par exemple un téléphone fixe. Par terminal de communication fixe, on entend un terminal configuré pour recevoir ou passer des appels téléphoniques, respectivement en provenance ou vers un terminal de communication de type fixe ou mobile (cellulaire ou portable), et rattaché à un réseau de communication fixe tel qu'un réseau téléphonique fixe, par exemple de type RTC (réseau téléphonique commuté) ou de type PSTN (PSTN pour l'acronyme anglais de « Public Switched Téléphone Network »). Le terminal de communication fixe 20 comporte par exemple un téléphone relié audit réseau de communication fixe, soit par une liaison filaire soit via un protocole de communication téléphonique sans fil.

La communication 15 entre le terminal visiteur 13 et le terminal de communication fixe 20 est effectuée, dans ce cas, par un échange vocal. Autrement dit, le résident est joint sur le terminal fixe 20, par exemple son téléphone fixe. A la suite de la communication 15, dans un mode de réalisation non couvert, si le résident autorise au visiteur l'accès au local 1, il envoie un signal d'autorisation 21 d'ouverture de la porte au serveur informatique 14

Préférentiellement, dans un mode de réalisation non couvert, le signal d'autorisation 21 peut être envoyé en appuyant sur une touche du terminal fixe 20, par exemple la touche « # ». Le signal 21 est interprété par le serveur informatique 14 pour actionner le système de déverrouillage 11' via l'interface de communication 11" et ouvrir la porte 11 au visiteur.

Dans un mode de réalisation non couvert, le terminal résident 10' est préférentiellement un ordiphone 30 configuré pour communiquer avec le serveur informatique 14 de sorte à contrôler l'ouverture de la porte 11 directement via le serveur informatique 14. Ce mode de réalisation non couvert permet avantageusement de s'affranchir de l'envoie d'un signal au terminal visiteur 13 qui le transmet au serveur informatique 14. Ainsi, la réalisation du procédé est rapide et facile et évite le transfert via le terminal visiteur 13 qui pourrait constituer une source de dysfonctionnement, due à une connexion ou à une transmission d'une qualité insuffisante, nécessitant la répétition des étapes du procédé. Ce mode de réalisation de l'invention est néanmoins envisageable.

De manière avantageuse, le serveur informatique 14 est préalablement programmable par le terminal résident 10'. Par exemple, le serveur informatique 14 est configuré pour autoriser à certains terminaux résidents, notamment, un terminal résident 10' de référence de prérégler certaines fonctions. Le serveur informatique 14 accorde cette possibilité après une procédure d'authentification, par exemple, par un mot de passe ou toute autre procédure d'authentification classique.

Ainsi, le terminal résident 10' peut programmer le serveur informatique 14 de sorte à autoriser un libre accès, ou un accès pendant une certaine plage horaire, au local 1 pour un visiteur spécifique. A titre d'exemple, le terminal résident 10' renseigne préalablement le numéro de téléphone dudit visiteur spécifique ou un mot de passe ponctuel qu'il renseigne au visiteur, et la plage horaire pendant laquelle ce dernier peut accéder au local.

Le terminal visiteur 13 en envoyant l'information codée 12" au serveur informatique 14 pendant la plage horaire prédéfinie, et en essayant de communiquer avec le terminal résident 10', reconnaît le numéro de téléphone, ou demande le mot de passe ponctuel. De cette manière, le serveur informatique 14 autorise l'ouverture de la porte 11 sans que le résident soit dérangé par une tentative de communication par le visiteur.

Avantageusement le procédé de gestion d'accès permet une flexibilité et un réglage offrant une utilisation pratique et confortable, que ce soit pour le résident ou pour le visiteur.

De manière préférentielle, la communication 15 entre les terminaux résident 10' et visiteur 13 est réalisée via un réseau de télécommunication public. En outre, les terminaux résident 10' et visiteur 13 sont configurés pour échanger des données vidéo et/ou audio et/ou textuelles, par exemple sous forme alphanumérique. Avantageusement, la communication 15 selon ce mode de réalisation facilite la reconnaissance du visiteur et/ou les raisons de son souhait pour s'introduire dans le local 1, et de ce fait facilite la prise de décision du résident d'ouvrir ou non la porte 11 au visiteur. Ainsi, la gestion d'accès est réalisée de manière facile et sécurisée.

Par ailleurs, le procédé utilise un terminal résident 10' pouvant être soit un terminal de communication fixe soit un ordiphone. Ainsi, le procédé permet, de manière avantageuse, la suppression de la nécessité d'utilisation et d'installation de combinés intérieurs fixes connectés par voie filaire à un terminal d'accueil. Ce qui permet une mise en œuvre et/ou une utilisation rapides et faciles du procédé de gestion d'accès. En outre, une économie conséquente peut être réalisée dans le cas ou le local 1 comporte un grand nombre de résidents. De plus, le procédé offre également la possibilité de contrôler l'ouverture de la porte à distance, même si le résident n'est pas au sein du local 1. Notamment, le résident peut avantageusement utiliser son ordiphone comme un terminal visiteur 13, pour s'ouvrir la porte 11.

Selon le type du local et selon le besoin, le support 12 peut comporter un circuit électronique radio-identifiant RID, par exemple un circuit électronique de communication en champ proche NFC. La radio-identification est une technique utilisée pour stocker et/ou récupérer des données à distance en utilisant un radio-identifiant ou une radio-étiquette. Le radio-identifiant RID du support 12 stocke notamment l'information codée 12'.

Le radio-identifiant RID comporte de manière générale une antenne associée à une puce électronique qui lui permet de recevoir et de répondre à des requêtes radio émises depuis un émetteur-récepteur, qui est selon ce mode de réalisation le terminal visiteur 13.

Le terminal visiteur 13 comporte préférentiellement un microprocesseur connecté à une ou plusieurs mémoires, par exemple à une mémoire vive et à une mémoire programmable et effaçable apte à mémoriser une application ou un programme installé sur le terminal visiteur 13.

Le terminal visiteur 13 comporte également des moyens de communication NFC adaptés pour communiquer avec le radio-identifiant RID, et des interfaces de communication, par exemple par Internet, apte à communiquer avec le serveur informatique 14.

Préférentiellement, le terminal visiteur 13 comporte également un ordiphone comportant lesdites mémoires et microprocesseur, dans lequel une ou plusieurs applications ou programmes sont installés de sorte à servir d'interface entre les moyens de communication NFC et l'ordiphone.

Les capacités de lecture d'un radio-identifiant conjuguées à des capacités de communication via un réseau de télécommunication mobile, permettent une gestion facile et sécurisée de l'accès d'un visiteur à un local. Ce mode de réalisation peut être avantageusement mis à profit pour gérer les accès à des sites tertiaires ou industriels sensibles. Il permet de doubler le niveau de sécurité de l'accès au site. En effet, le visiteur doit être en possession d'un terminal compatible pour lire le radio-identifiant RID du support 12. Ensuite, le visiteur doit demander l'autorisation du résident dans le local ou le site pour pouvoir pénétrer dans le site, ou pour accéder à certains bâtiments sur le site lui-même.

Par ailleurs, le support 12 peut comporter une information codée 12" comportant un code numérique, un code barre ou préférentiellement un code matriciel QR appelé communément code QR (QR pour l'acronyme anglais « quick response »).

Avantageusement, l'utilisation de tels codes ne nécessite pas l'utilisation d'un terminal visiteur 13 spécifique. En effet, la plupart des ordiphones pouvant être utilisés comme un terminal visiteur 13. De ce fait, le terminal visiteur 13 comporte généralement une caméra permettant de lire ce type de codes, notamment un code QR. En outre, plusieurs applications en libre service permettent de décoder ce type de code. Ainsi, l'ordiphone 13, en lisant le code 12', est mis en relation avec le serveur informatique 14.

Avantageusement, le terminal résident 10' comporte une mémoire 50 configurée pour sauvegarder des informations relatives à la communication 15 entre le terminal visiteur 13 et le terminal résident 10'. Ainsi, le terminal résident peut avantageusement avoir accès aux coordonnées du terminal visiteur 13, par exemple le numéro de téléphone du visiteur. En outre, il est possible d'enregistrer et horodater les communications 15 et les opérations d'ouverture de la porte 11, offrant ainsi de manière avantageuse une traçabilité des entrées au local 1.

Selon un exemple de réalisation illustré à la figure 2, les terminaux résidents 10' et visiteur 13 sont des ordiphones. L'information codée 12' représentative du local 1 est un code matriciel QR. Lorsque le visiteur souhaite s'introduire dans le local 1, il utilise son ordiphone 13 pour lire le code QR.

Après la saisie et la lecture du code QR, il est mis en relation avec le serveur informatique 14. Selon cet exemple de réalisation, le serveur informatique 14 stocke une liste de contacts associée à l'information codée 12' représentative du local 1, autrement dit, représentative des résidents dans le local 1.

Pour chaque espace résident 10 le serveur informatique 14 comporte des données 10" associées à cet espace. Les données 10" comportent notamment le nom du résident, l'emplacement de l'espace résident 10 dans le local 1, et le numéro de téléphone du terminal résident 10' associé à l'espace résident 10. Pour chaque espace résident 10, il peut y avoir plusieurs noms et/ou plusieurs numéros de téléphones, autrement dit plusieurs terminaux résidents (10'₁, 10'₂, ...) : plusieurs ordiphones et/ou téléphones fixes, associés à cet espace.

De manière préférentielle, lorsque le serveur informatique 14 reçoit le code QR, il permet le lancement d'une application sur l'ordiphone 13 du visiteur. Cette application, permet notamment d'afficher sur l'écran de l'ordiphone 13 une liste interactive 40 des différents contacts des résidents associés à des espaces résidents 10i dans le local 1 (figure 2).

Par liste interactive, on entend une liste comportant une ou plusieurs touches permettant en l'actionnant, par exemple sur l'écran de l'ordiphone 13, d'entrer en relation avec le terminal du résident 10' choisi. L'application permet avantageusement d'établir une communication 15 via un réseau de télécommunication public sans avoir l'accès au numéro de téléphone du terminal résident 10'. Dans un mode de réalisation avantageux, le terminal visiteur établit une première communication avec le serveur 14 et le serveur établit une deuxième communication avec le terminal résident. De cette manière, le terminal visiteur n'a pas accès aux informations relatives au terminal résident. Par exemple, la communication 15 peut être réalisée par une procédure de type voix sur IP, ou « VoIP » (VoIP pour l'acronyme anglais de « Voice over IP »), est une technique qui permet de communiquer par échange de flux multimédias (audio et/ou vidéo) sur des réseaux compatibles IP, tels qu'un réseau privé ou réseau Internet.

La communication 15 peut être réalisée par un échange téléphonique et/ou télévisuel, ou encore par l'envoi au terminal résident 10', d'un minimessage ou sms. Par minimessage, on entend un message alphanumérique de longueur limité transmis via un réseau de radiocommunication avec les mobiles.

Le minimessage peut être un minimessage standard stocké dans le serveur informatique 14 et complété par le visiteur, fournissant par exemple, l'identité du visiteur et/ou la raison de sa visite et/ou son numéro de téléphone. Le minimessage peut être également rédigé par le visiteur. Le minimessage est ensuite transmis au résident via le serveur informatique 14. Ainsi, le visiteur ne peut pas avoir accès au numéro de téléphone du résident.

Le résident en recevant ce minimessage, peut actionner l'ouverture de la porte 11 pour autoriser l'entrée du visiteur. Le résident peut également répondre par l'envoi d'un minimessage via l'interface informatique 14, ou encore s'il connaît le visiteur l'appeler directement sur l'ordiphone 13.

## Revendications

1. Procédé de gestion d'accès à un local comportant un espace résident (10) comportant plusieurs résidents, via une porte (11), en prévoyant un support d'une information codée (12') représentative du local, et un terminal résident (10') associé à l'espace résident (10);
**caractérisé en ce qu'**il prévoit :
- le support (12) placé à proximité de la porte (11) ;
- un terminal visiteur (13) mobile configuré pour lire l'information codée (12'); et
- un serveur informatique (14) stockant des données résidents (10") associées à l'espace résident (10), le serveur informatique (14) étant configuré pour communiquer avec le terminal visiteur (13) et pour contrôler l'ouverture de la porte (11) ;
et **en ce qu'**il comporte les étapes successives suivantes :
- récupérer l'information codée (12') au moyen du terminal visiteur (13) à partir dudit support (12) puis transmettre l'information codée (12') au serveur informatique (14);
- traiter l'information codée (12') par le serveur informatique (14), puis transmettre les données résidents (10") au terminal visiteur (13) de sorte à autoriser au terminal visiteur (13) d'établir une communication (15) avec un terminal résident (10'), les données résidents (10") reçues par le terminal visiteur (13) étant dépourvues du numéro de téléphone des résidents et comportant une liste d'informations (40) affichée sur le terminal visiteur permettant au visiteur de choisir un résident et d'entrer en relation avec le terminal du résident choisi, le terminal visiteur (13) établissant une première communication avec le serveur informatique (14) et le serveur informatique (14) établissant une deuxième communication avec le terminal résident (10') ; le serveur informatique (14) stockant ladite liste d'informations (40) associées à plusieurs terminaux autorisés (10i) en relation avec l'information codée 12' et comportant le terminal résident (10') ; et l'étape de traitement de l'information codée (12') comportant une étape de transmission de la liste d'informations (40) vers le terminal visiteur (13) de sorte à choisir les données résidents (10") associées au terminal résident (10') dans la liste d'informations (40), et à communiquer avec le terminal résident (10') ;
- autoriser l'ouverture de la porte (11) par le terminal résident (10'), le terminal résident (10') envoyant un signal chiffré via le serveur informatique (14) au terminal visiteur (13) qui le transmet au serveur informatique (14) pour ouvrir la porte (11).

2. Procédé selon la revendication précédente, **caractérisé en ce que** le terminal visiteur (13) est un ordiphone.

3. Procédé selon l'une quelconque des revendications précédentes, **caractérisé en ce que** le support (11) comporte un circuit électronique radio- identifiant (RID).

4. Procédé selon l'une quelconque des revendications précédentes, **caractérisé en ce que** le support (11) affiche un code numérique, un code-barres, ou un code matriciel (QR).

5. Procédé selon l'une quelconque des revendications précédentes, **caractérisé en ce que** la communication (15) est réalisée par un réseau de télécommunication public, et que les terminaux résident (13) et visiteur (14) échangent des données vidéo et/ou audio et/ou textuelles.

6. Procédé selon l'une des revendications précédentes, **caractérisé en ce que** le terminal résident (10') comporte une mémoire (50) configurée pour sauvegarder des informations relatives à la communication (15) entre le terminal résident (10') et le terminal visiteur (13).

## Patentansprüche

1. Verfahren zum Verwalten eines Zugangs zu einem Raum, umfassend einen Bewohnerbereich (10), umfassend mehrere Bewohner, über eine Tür (11), bei Vorsehen eines Trägers von codierten Informationen (12'), die den Raum repräsentieren, und eines Bewohnerendgeräts (10'), das dem Bewohnerbereich (10) zugeordnet ist;
**dadurch gekennzeichnet, dass** es vorsieht:
- den Träger (12), der in der Nähe der Tür (11) platziert ist;
- ein mobiles Besucherendgerät (13), das zum Lesen der codierten Informationen (12') konfiguriert ist; und
- einen Computerserver (14), der Bewohnerdaten (10") speichert, die dem Bewohnerraum (10) zugeordnet sind, wobei der Computerserver (14) zum Kommunizieren mit dem Besucherendgerät (13) und zum Steuern der Öffnung der Tür (11) konfiguriert ist;
und dass es die folgenden aufeinanderfolgenden Schritte umfasst:
- Abrufen der codierten Informationen (12') mittels des Besucherendgeräts (13) aus dem Träger (12), dann Übertragen der codierten Informationen (12') an den Computerserver (14);
- Verarbeiten der codierten Informationen (12') durch den Computerserver (14), dann Übertragen der Bewohnerdaten (10") an das Besucherendgerät (13), um das Besucherendgerät (13) zu autorisieren, eine Kommunikation (15) mit einem Bewohnerendgerät (10') aufzubauen, wobei die Bewohnerdaten (10"), die durch das Besucherendgerät (13) empfangen werden, keine Telefonnummer der Bewohner enthalten und eine Liste (40) von Informationen umfassen, die auf dem Besucherendgerät angezeigt werden, die es dem Besucher ermöglichen, einen Bewohner auszuwählen und mit dem Endgerät des ausgewählten Bewohners in Kontakt zu treten, wobei das Besucherendgerät (13) eine erste Kommunikation mit dem Computerserver (14) aufbaut und der Computerserver (14) eine zweite Kommunikation mit dem Bewohnerendgerät (10') aufbaut; wobei der Computerserver (14) die Liste (40) von Informationen speichert, die mehreren autorisierten Endgeräten (10i) in Bezug auf die codierten Informationen 12' zugeordnet sind und das Bewohnerendgerät (10') umfassen; und der Schritt des Verarbeitens der codierten Informationen (12') einen Schritt des Übertragens der Liste (40) von Informationen an das Besucherendgerät (13) umfasst, um die Bewohnerdaten (10"), die dem Bewohnerendgerät (10') zugeordnet sind, in der Liste (40) von Informationen auszuwählen und um mit dem Bewohnerendgerät (10') zu kommunizieren;
- Autorisieren des Öffnens der Tür (11) durch das Bewohnerendgerät (10'), wobei das Bewohnerendgerät (10') ein verschlüsseltes Signal über den Computerserver (14) an das Besucherendgerät (13) sendet, das es an den Computerserver (14) zum Öffnen der Tür (11) überträgt.

2. Verfahren nach dem vorstehenden Anspruch,
**dadurch gekennzeichnet, dass** das Besucherendgerät (13) ein Smartphone ist.

3. Verfahren nach einem der vorstehenden Ansprüche,
**dadurch gekennzeichnet, dass** der Träger (11) eine elektronische Funkidentifikationsschaltung (RID) umfasst.

4. Verfahren nach einem der vorstehenden Ansprüche,
**dadurch gekennzeichnet, dass** der Träger (11) einen digitalen Code, einen Strichcode oder einen Matrixcode (QR) anzeigt.

5. Verfahren nach einem der vorstehenden Ansprüche,
**dadurch gekennzeichnet, dass** die Kommunikation (15) durch ein öffentliches Telekommunikationsnetz erfolgt und dass die Bewohner- (13) und Besucherendgeräte (14) Video- und/oder Audio- und/oder Textdaten austauschen.

6. Verfahren nach einem der vorstehenden Ansprüche,
**dadurch gekennzeichnet, dass** das Bewohnerendgerät (10') einen Speicher (50) umfasst, der konfiguriert ist, um Informationen bezüglich der Kommunikation (15) zwischen dem Bewohnerendgerät (10') und dem Besucherendgerät (13) zu sichern.

## Claims

1. A method for managing access to a premises comprising a resident space (10) comprising several residents, via a door (11), by providing a support for encoded information (12') representative of the premises, and a resident terminal (10') associated with the resident space (10);
**characterized in that** it provides:
- the support (12) placed proximate to the door (11);
- a mobile visitor terminal (13) configured to read the encoded information (12'); and
- a computer server (14) storing resident data (10") associated with the resident space (10), the computer server (14) being configured to communicate with the visitor terminal (13) and to control the opening of the door (11);
and **in that** it comprises the following successive steps:
- retrieving the encoded information (12') by means of the visitor terminal (13) from said support (12) and then transmitting the encoded information (12') to the computer server (14);
- processing the encoded information (12') via the computer server (14), then transmitting the resident data (10") to the visitor terminal (13) so as to authorize the visitor terminal (13) to establish communication (15) with a resident terminal (10'), the resident data (10") received by the visitor terminal (13) being devoid of the resident's telephone number and comprising a list of information (40) displayed on the visitor terminal enabling the visitor to choose a resident and enter into contact with the terminal of the chosen resident, the visitor terminal (13) establishing a first communication with the computer server (14) and the computer server (14) establishing a second communication with the resident terminal (10'); the computer server (14) storing said list of information (40) associated with multiple authorized terminals (10i) in relation to the encoded information 12' and comprising the resident terminal (10'); and the step of processing the encoded information (12') comprising a step of transmitting the list of information (40) to the visitor terminal (13) so as to select the resident data (10") associated with the resident terminal (10') from the list of information (40), and to communicate with the resident terminal (10');
- authorizing the resident terminal (10') to open the door (11), the resident terminal (10') sending an encrypted signal via the computer server (14) to the visitor terminal (13), which transmits it to the computer server (14) in order to open the door (11).

2. The method according to the preceding claim, **characterized in that** the visitor terminal (13) is a smartphone.

3. The method according to any one of the preceding claims, **characterized in that** the support (11) comprises a radio-identifying electronic circuit (RID).

4. The method according to any one of the preceding claims,
**characterized in that** the support (11) displays a digital code, a barcode or a matrix code (QR).

5. The method according to any one of the preceding claims,
**characterized in that** the communication (15) is carried out via a public telecommunication network, and that the resident (13) and visitor (14) terminals exchange video and/or audio and/or text data.

6. The method according to one of the preceding claims,
**characterized in that** the resident terminal (10') comprises a memory (50) configured to save information relating to the communication (15) between the resident terminal (10') and the visitor terminal (13).
